# FASCICULE DE BREVET EUROPEEN

(11) **EP 1 752 338 B1**
(45) Date de publication et mention de la délivrance du brevet: **02.01.2008**
(21) Numéro de dépôt: 06300829.6
(22) Date de dépôt: 25.07.2006
(51) Int. Cl.: B60R 5/04

(54) **Tablette arrière pivotante de véhicule automobile**
Hintere schwenkbare Abdeckplatte eines Kraftfahrzeugs
Pivotable rear cover plate of a motor vehicle

(30) Priorité: 09.08.2005 FR 0508457
(43) Date de publication de la demande: 14.02.2007
(73) Titulaire: Peugeot Citroen Automobiles SA, 78943 Vélizy-Villacoublay Cedex (FR)
(72) Inventeur: Le Dall, Christophe, 92150 Suresnes (FR)

(56) Documents cités:
- DE-A1- 10 260 573
- FR-A- 2 199 705
- FR-A- 2 467 567
- FR-A- 2 757 809

## Description

La présente invention concerne une tablette arrière pivotante de véhicule automobile ainsi selon le préambule de la revendication 1. Une telle tablette est connue du document FR-A-2 757 809.

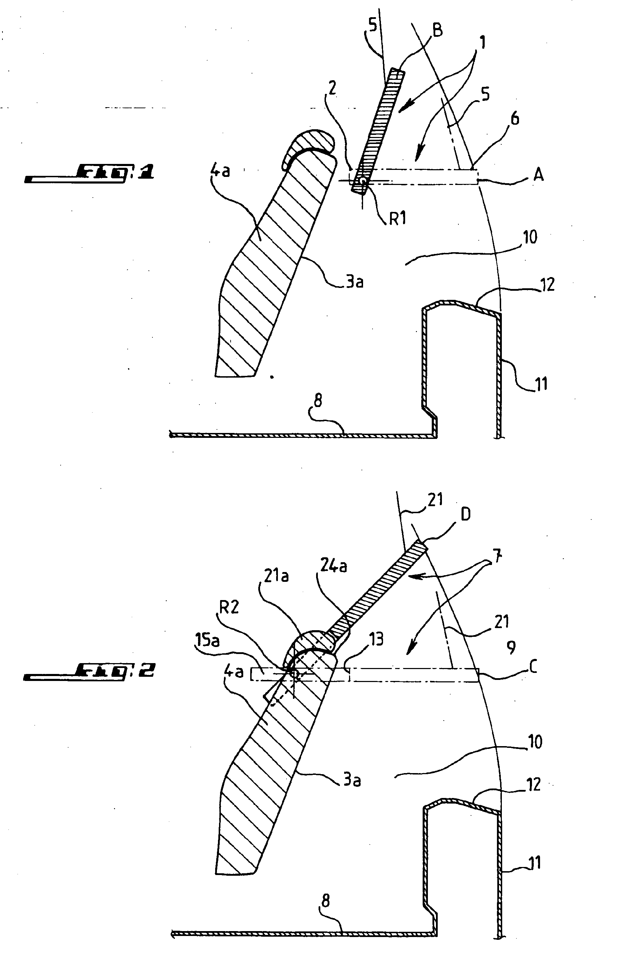

En référence à la figure 1 qui représente une tablette arrière 1 de l'état de la technique, l'invention concerne le domaine des tablettes arrières montées approximativement derrière les sièges arrière d'un véhicule automobile au dessus d'un coffre 10 qui est délimité par au moins un dossier de sièges 4a,4b, un plancher 8, deux parois latérales non visibles sur cette figure et une paroi arrière 11 définissant par son bord supérieur libre 12 le seuil d'ouverture du coffre 10.

La tablette 1 peut être basculée depuis une position active de service A approximativement parallèle au plancher 8 du coffre 10 jusqu'à une position inactive relevée B dégageant l'accès au coffre depuis l'arrière du véhicule.

Une telle tablette 1 est montée pivotante selon un axe de pivotement transversal R1 situé au niveau de son bord avant 2 à proximité de la face arrière 3a,3b du dossier de siège correspondant 4a,4b.

Le hayon non représenté est relié à cette tablette 1 par deux sangles 5 qui sont disposées au niveau de la partie arrière 6 de la tablette 1 et qui entraînent, à l'ouverture du hayon, la tablette 1 jusqu'à sa position relevée B et la maintiennent dans cette position tant que le hayon est ouvert.

Cependant un tel dispositif présente l'inconvénient principal d'autoriser un accès réduit au coffre 10 lorsque le hayon est ouvert du fait de la configuration de la tablette 1 dans sa position relevée B.

La tablette de l'invention permet notamment de pallier l'inconvénient précité et est essentiellement caractérisée en ce que qu'elle comporte des moyens d'articulation 19a, 19b, 23a, 23b, 25a, 25b tels que le bord avant 13 de la tablette 7 est approximativement au dessus de la face supérieure 24a, 24b du ou des dossiers de siège arrière 4a, 4b lorsque la dite tablette 7 est dans sa position inactive relevée D.

De cette façon, la partie située dessus du coffre est totalement ce qui autorise un accès maximum au coffre.

Avantageusement, la tablette 7 est montée pivotante autour d'un axe de pivotement transversal R2 situé à l'avant de la face arrière 3a,3b du dossier de siège arrière correspondant 4a,4b.

De préférence, la tablette de l'invention 7 comporte deux oreilles 15a, 15b s'étendant approximativement depuis la partie arrière de la tablette 9 située au dessus du coffre 10 jusqu'au niveau de la face avant 16 du dossier de siège 4a,4b entre la carrosserie 17 et le bord latéral correspondant 18a, 18b du dossier de siège 4a, 4b.

Selon un premier mode de réalisation de l'invention, la tablette 7 est montée pivotante relativement au dossier de siège 4a, 4b autour de deux axes cylindriques 19a, 19b montés transversalement dans et depuis chacun des bords latéraux 18a, 18b du dossier de siège 4a, 4b jusqu'à et dans chacun des bords internes latéraux 20a, 20b de la l'oreille lui faisant face.

Selon un deuxième mode de réalisation, les moyens d'articulation 19a, 19b, 23a, 23b, 25a, 25b comprennent au moins une patte rigide 23a, 23b solidaire du bord avant 13 de la tablette arrière 7 et qui est montée pivotante autour d'un axe de pivotement correspondant R3, R4 situé approximativement au niveau du bord supérieur 24a, 24b du dossier de siège arrière 4a, 4b.

Selon un troisième mode de réalisation de l'invention, les moyens d'articulation 19a, 19b, 23a, 23b, 25a, 25b comprennent au moins un élément de guidage arqué 25a, 25b qui s'étend depuis approximativement la face arrière 3a,3b du dossier de siège arrière 4a, 4b jusqu'au bord supérieur 24a, 24b du dit dossier de siège 4a, 4b et qui est constitué sur toute sa longueur d'un rail de guidage 26a, 26b dans lequel est logée à coulissement une patte de liaison de forme conjuguée 27a, 27b solidaire du bord avant 13 de la tablette arrière 7.

Enfin, l'invention concerne également un véhicule automobile comprenant une tablette arrière 7 selon l'une quelconque des revendications précédentes.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de l'invention et sur lesquels :
- la figure 1 est une vue schématique de côté de la partie arrière d'un véhicule automobile intégrant une tablette de l'art antérieur ;
- la figure 2 est une vue schématique de côté de la partie arrière d'un véhicule automobile intégrant la tablette de l'invention selon un premier mode de réalisation ;
- la figure 3 est une vue en perspective de l'arrière d'un véhicule automobile intégrant la tablette de la figure 2 représentée dans sa position active de service ;
- la figure 4 est une vue en perspective de l'arrière d'un véhicule automobile intégrant la tablette de la figure 2 représentée dans sa position relevée inactive ;
- la figure 5 est une vue en perspective de l'arrière d'un véhicule automobile intégrant la tablette de l'invention représentée dans sa position active de service selon un deuxième mode de réalisation ;
- la figure 6 est une vue en perspective de l'arrière d'un véhicule automobile intégrant la tablette de la figure 5 représentée dans sa position relevée inactive ;
- la figure 7 est une vue en perspective de l'arrière d'un véhicule automobile intégrant la tablette de l'invention représentée dans sa position active de service selon un troisième mode de réalisation ;
- la figure 8 est une vue en perspective de l'arrière d'un véhicule automobile intégrant la tablette de la figure 7 représentée dans sa position relevée inactive.

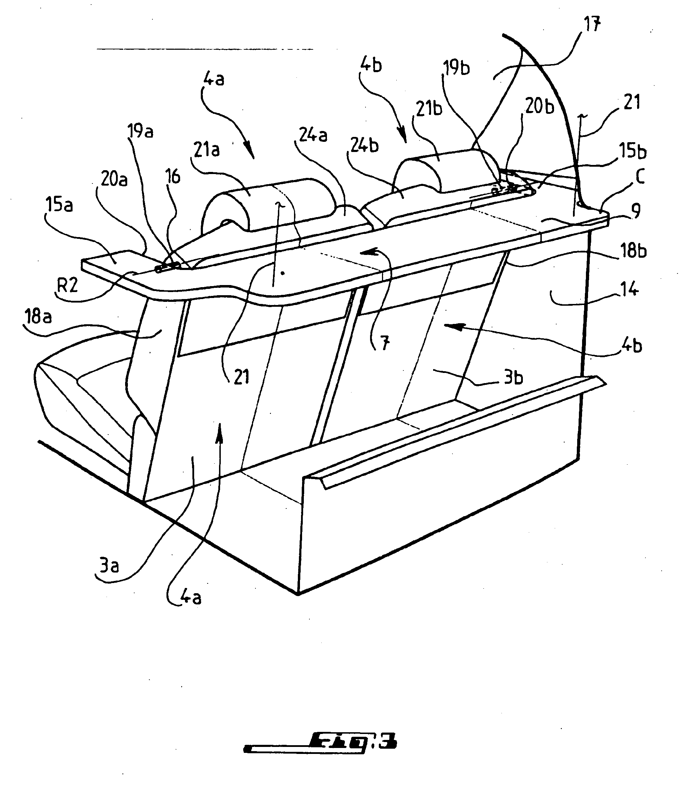

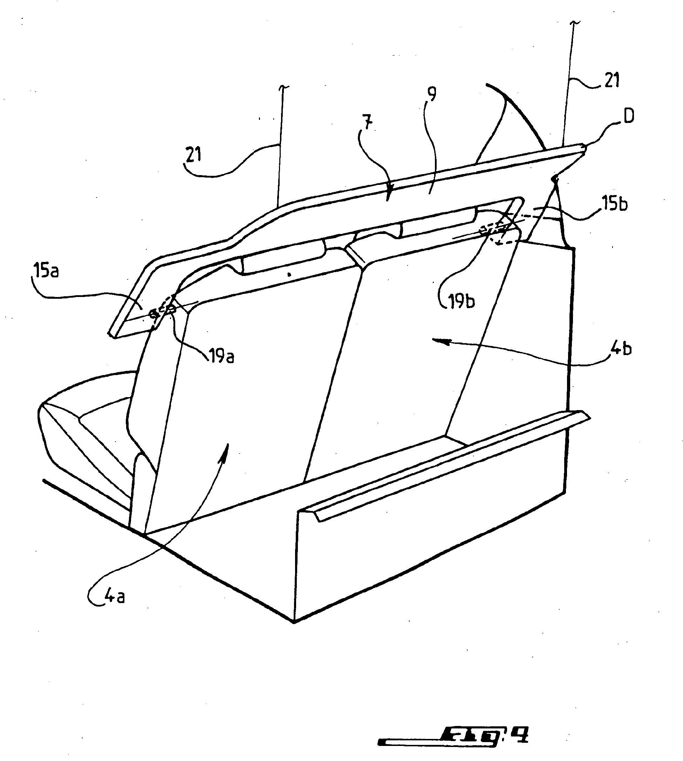

En référence aux figures 2 et 3, la tablette de l'invention 7 est montée dans sa position de service active C sensiblement parallèle au plancher 8 du coffre 10 et approximativement dans le prolongement de la face supérieure 24a, 24b des deux dossiers de siège arrière 4a, 4b représentés surmontés chacun d'un appui tête 21a, 21b.

La tablette de l'invention comporte une partie arrière 9 qui s'étend latéralement entre les bords latéraux 14 du coffre 10 en respectant les contours de la carrosserie du véhicule et longitudinalement depuis son bord avant 13 situé à proximité de la face arrière 3a,3b des dossiers de siège 4a,4b jusqu'à approximativement la lunette arrière du véhicule non représentée.

De plus, la tablette de l'invention comprend deux oreilles 15a, 15b qui s'étendent dans le prolongement de et depuis la partie arrière 9 approximativement jusqu'au niveau de la face avant 16 de chaque dossier de siège 4a,4b entre la carrosserie 17 et le bord latéral 18a, 18b du dossier de siège correspondant 4a, 4b.

La tablette de l'invention est maintenue dans sa position initiale de service C approximativement parallèle au plancher du coffre 10 par ses oreilles 15a,15b qui reposent chacune sur les garnitures latérales non visibles sur les figures.

La tablette 7 de l'invention est, dans son premier mode de réalisation, montée pivotante autour d'un axe de rotation transversal R2 situé à l'avant des faces arrières 3a,3b des dossiers de sièges 4a,4b et matérialisé par deux axes cylindriques 19a, 19b montés transversalement dans et depuis chacun des bords latéraux 18a, 18b des dossiers de siège correspondant 4a, 4b jusqu'à et dans chacun des bords internes latéraux 20a, 20b de l'oreille lui faisant face 15a, 15b.

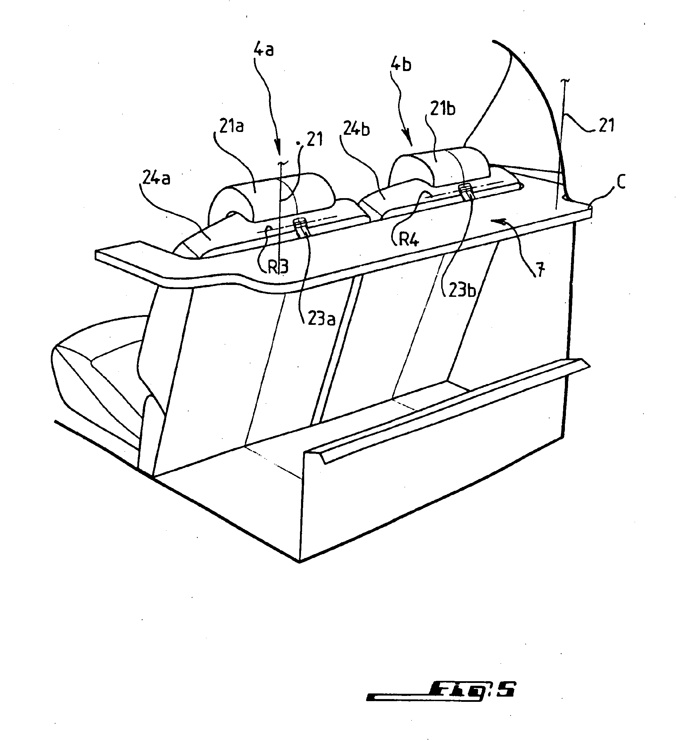

En référence plus particulièrement aux figures 2 et 4, le pivotement de la tablette 7 selon l'axe R2 d'environ 45° entraîne la tablette 7 dans sa position relevée D dans laquelle son bord avant 13 est au dessus des appuis tête 21a, 21b du dossier de siège 4a, 4b correspondant.

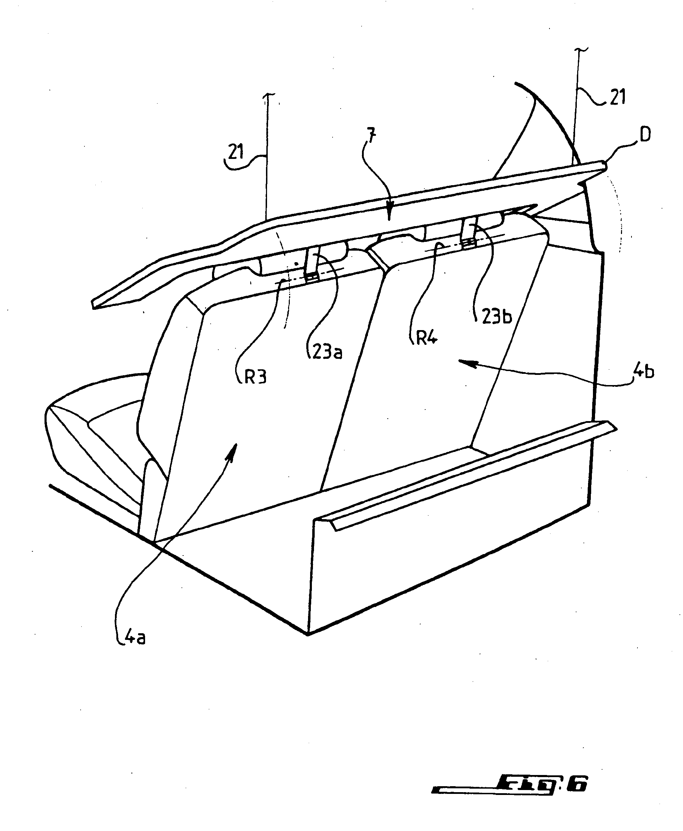

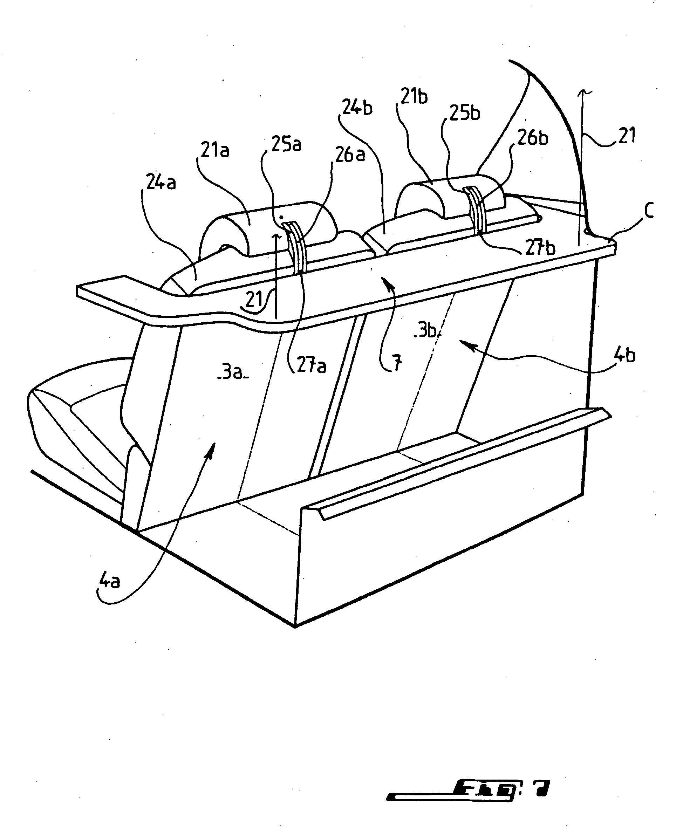

En référence aux figures 5 et 6, selon un deuxième mode de réalisation de l'invention, la tablette 7 est articulée au dossier de siège 4a, 4b au moyen de deux pattes rigides 23a, 23b qui sont solidaires du bord avant 13 de la tablette 7 et qui sont montées pivotantes autour d'un axe de rotation respectif R3, R4 situé sur le bord supérieur respectif 24a, 24b du dossier correspondant 4a, 4b de façon que par pivotement des pattes 23a, 23a autour de leur axe respectif R3, R4, la tablette 7 passe de sa position active C à sa position relevée D.

Il peut être possible de prévoir que les pattes 23a, 23b soient montées articulées au bord avant 13 de la tablette 7 de façon à garantir un pivotement maximal de la tablette 7 dans sa position relevée D.

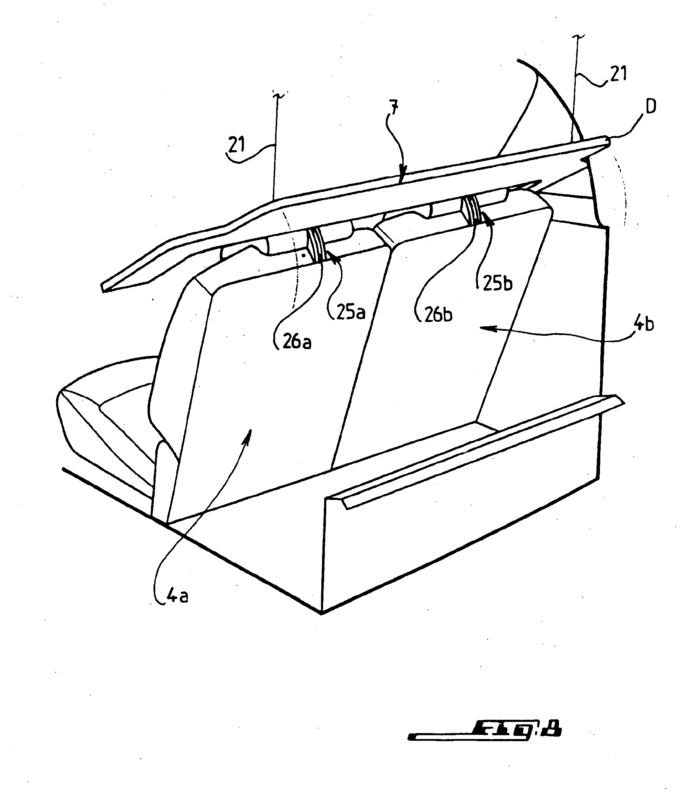

En référence aux figures 7 et 8, la tablette de l'invention selon un troisième mode de réalisation est articulée au dossier de siège 4a, 4b au moyen de deux éléments de guidage arqués 25a, 25b disposés chacun approximativement au niveau du bord supérieur 24a, 24b du dossier de siège correspondant 4a, 4b.

Chaque élément de guidage arqué 25a, 25b s'étend depuis approximativement la face arrière 3a,3b du dossier de siège correspondant 4a, 4b jusqu'à l'appui tête 21a, 21b et est constitué sur toute sa longueur d'un rail de guidage 26a, 26b dans lequel est logée à coulissement une patte de liaison de forme conjuguée 27a, 27b rigidement solidaire du bord avant 13 de la tablette arrière 7.

De cette façon, le coulissement de la patte de liaison 27a, 27b depuis l'extrémité inférieure du rail 26a, 26b jusqu'à l'extrémité supérieure de ce rail 26a, 26b permet de faire pivoter la tablette 7 depuis sa position active C jusqu'à sa position inactive relevée D comme représenté sur la figure 8.

Les moyens d'articulations décrits précédemment peuvent comprendre des moyens de blocage non représentés par exemple par encliquetage permettant de maintenir la tablette dans sa position relevée D.

Dans ce cas, la tablette 7 reste dans sa position active C à l'ouverture du coffre 10 et son pivotement est actionné par l'utilisateur par soulèvement de la tablette 7 qui reste bloquée en position relevée D par les moyens de blocage déverrouillables manuellement par l'exercice d'une force d'appui sur la tablette 7.

Il peut alternativement être prévu que, comme pour la tablette de l'art antérieur, la tablette 7 de l'invention soit reliée au hayon non représenté par deux sangles 21 qui entraînent la tablette 7 depuis sa position active C jusqu'à sa position relevée D lors de l'ouverture de ce hayon.

## Revendications

1. Tablette arrière pivotante (7) de véhicule automobile qui bascule depuis une position active de service (C) approximativement parallèle au plancher (8) du coffre (10) jusqu'à une position inactive relevée (D) dégageant l'accès au coffre (10) depuis l'arrière du véhicule, **caractérisée en ce qu'**elle comporte des moyens d'articulation (19a, 19b, 23a, 23b, 25a, 25b) tels que le bord avant (13) de la tablette (7) est approximativement au dessus de la face supérieure (24a, 24b) du ou des dossiers de siège arrière (4a, 4b) lorsque la dite tablette (7) est dans sa position inactive relevée (D).

2. Tablette arrière selon la revendication 1, **caractérisée en ce que** la tablette (7) est montée pivotante autour d'un axe de pivotement transversal (R2) situé à l'avant de la face arrière (3a,3b) du dossier de siège arrière correspondant (4a,4b).

3. Tablette selon l'une quelconque des revendications 1 et 2, **caractérisée en ce qu**'elle comporte deux oreilles (15a, 15b) s'étendant approximativement depuis la partie arrière de la tablette (9) située au dessus du coffre jusqu'au niveau de la face avant (16) du dossier de siège (4a,4b) entre la carrosserie (17) et le bord latéral correspondant (18a, 18b) du dossier de siège (4a, 4b).

4. Tablette selon la revendication 3, **caractérisée en ce que** la dite tablette (7) est montée pivotante relativement au dossier de siège (4a, 4b) autour de deux axes cylindriques (19a, 19b) montés transversalement dans et depuis chacun des bords latéraux (18a, 18b) du dossier de siège (4a, 4b) jusqu'à et dans chacun des bords internes latéraux (20a, 20b) de la l'oreille lui faisant face.

5. Tablette arrière selon la revendication 1, **caractérisée en ce que** les moyens d'articulation (19a, 19b, 23a, 23b, 25a, 25b) comprennent au moins une patte rigide (23a, 23b) solidaire du bord avant (13) de la tablette arrière (7) et qui est montée pivotante autour d'un axe de pivotement correspondant (R3, R4) situé approximativement au niveau du bord supérieur (24a, 24b) du dossier de siège arrière (4a, 4b).

6. Tablette arrière selon la revendication 1, **caractérisée en ce que** les moyens d'articulation (19a, 19b, 23a, 23b, 25a, 25b) comprennent au moins un élément de guidage arqué (25a, 25b) qui s'étend depuis approximativement la face arrière (3a,3b) du dossier de siège arrière (4a, 4b) jusqu'au bord supérieur (24a, 24b) du dit dossier de siège (4a, 4b) et qui est constitué sur toute sa longueur d'un rail de guidage (26a, 26b) dans lequel est logée à coulissement une patte de liaison de forme conjuguée (27a, 27b) solidaire du bord avant (13) de la tablette arrière (7).

7. Véhicule automobile comprenant une tablette arrière (7) selon l'une quelconque des revendications précédentes.

## Claims

1. Pivoting rear shelf (7) for a motor vehicle, which swings from a service, active position (C) approximately parallel to the floor (8) of the boot (10) to a raised, inactive position (D) providing access to the boot (10) from the rear of the vehicle, **characterized in that** it includes articulation means (19a, 19b, 23a, 23b, 25a, 25b) such that the front edge (13) of the shelf (7) is approximately above the upper face (24a, 24b) of the rear seat back support or supports (4a, 4b) when said shelf (7) is in its raised, inactive position (D).

2. Rear shelf according to Claim 1, **characterized in that** the shelf (7) is mounted so as to pivot about a transverse pivot pin (R2) located forward of the rear face (3a, 3b) of the corresponding rear seat back support (4a, 4b).

3. Shelf according to either of Claims 1 and 2, **characterized in that** it includes two lugs (15a, 15b) extending approximately from the rear part of the shelf (7) located above the boot to the point level with the front face (16) of the seat back support (4a, 4b) between the bodywork (17) and the corresponding lateral edge (18a, 18b) of the seat back support (4a, 4b).

4. Shelf according to Claim 3, **characterized in that** said shelf (7) is mounted so as to pivot relative to the seat back support (4a, 4b) about two cylindrical pins (19a, 19b) that are mounted transversely in and from each of the lateral edges (18a, 18b) of the seat back support (4a, 4b) as far as and in each of the internal lateral edges (20a, 20b) of the lug facing it.

5. Rear shelf according to Claim 1, **characterized in that** the articulation means (19a, 19b, 23a, 23b, 25a, 25b) include at least one rigid tab (23a, 23b) which is integral with the front edge (13) of the rear shelf (7) and is mounted so as to pivot about a corresponding pivot pin (R3, R4) located approximately level with the upper edge (24a, 24b) of the rear seat back support (4a, 4b).

6. Rear shelf according to Claim 1, **characterized in that** the articulation means (19a, 19b, 23a, 23b, 25a, 25b) include at least one arcuate guiding element (25a, 25b) which extends from approximately the rear face (3a, 3b) of the rear seat back support (4a, 4b) to the upper edge (24a, 24b) of said seat back support (4a, 4b) and consists over its entire length of a guide rail (26a, 26b) in which a linking tab (27a, 27b) of conjugate shape is slidingly housed, said linking tab being integral with the front edge (13) of the rear shelf (7).

7. Motor vehicle comprising a rear shelf (7) according to any one of the preceding claims.

## Patentansprüche

1. Schwenkbare hintere Ablage (7) eines Kraftfahrzeugs, die von einer aktiven Betriebsstellung (C) in etwa parallel zum Boden (8) des Kofferraums (10) bis in eine angehobene inaktive Stellung (D) kippt, die den Zugang zum Kofferraum (10) von der Rückseite des Fahrzeugs freilegt, **dadurch gekennzeichnet, dass** sie derartige Gelenkmittel (19a, 19b, 23a, 23b, 25a, 25b) aufweist, dass der vordere Rand (13) der Ablage (7) sich in etwa über der Oberseite (24a, 24b) der Rücksitz-Rückenlehne oder -Rückenlehnen (4a, 4b) befindet, wenn die Ablage (7) in ihrer angehobenen inaktiven Stellung (D) ist.

2. Hintere Ablage nach Anspruch 1, **dadurch gekennzeichnet, dass** die Ablage (7) um eine Querschwenkachse (R2) schwenkbar montiert ist, die sich vor der Rückseite (3a, 3b) der entsprechenden Rücksitz-Rückenlehne (4a, 4b) befindet.

3. Ablage nach einem der Ansprüche 1 und 2, **dadurch gekennzeichnet, dass** sie zwei Flügel (15a, 15b) aufweist, die sich in etwa vom hinteren Teil der Ablage (7), der sich über dem Kofferraum befindet, bis in Höhe der Vorderseite (16) der Sitzrückenlehne (4a, 4b) zwischen der Karosserie (17) und dem entsprechenden Seitenrand (18a, 18b) der Sitzrückenlehne (4a, 4b) erstrecken.

4. Ablage nach Anspruch 3, **dadurch gekennzeichnet, dass** die Ablage (7) bezüglich der Sitzrückenlehne (4a, 4b) um zwei zylindrische Achsen (19a, 19b) schwenkbar montiert ist, die quer in und ausgehend von jedem der Seitenränder (18a, 18b) der Sitzrückenlehne (4a, 4b) bis zum und in jedem der inneren Seitenränder {20a, 20b} des ihm gegenüberliegenden Flügels montiert sind.

5. Hintere Ablage nach Anspruch 1, **dadurch gekennzeichnet, dass** die Gelenkmittel (19a, 19b, 23a, 23b, 25a, 25b) mindestens eine steife Lasche (23a, 23b) aufweisen, die fest mit dem vorderen Rand (13) der hinteren Ablage (7) verbunden und um eine entsprechende Schwenkachse (R3, R4) schwenkbar montiert ist, die sich in etwa in Höhe des oberen Rands (24a, 24b) der Rücksitz-Rückenlehne (4a, 4b) befindet.

6. Hintere Ablage nach Anspruch 1, **dadurch gekennzeichnet, dass** die Gelenkmittel (19a, 19b, 23a, 23b, 25a, 25b) mindestens ein gebogenes Führungselement (25a, 25b) aufweisen, das sich von in etwa der Rückseite (3a, 3b) der Rücksitz-Rückenlehne (4a, 4b) bis zum oberen Rand (24a, 24b) der Sitzrückenlehne (4a, 4b) erstreckt und über seine ganze Länge aus einer Führungsschiene (26a, 26b) besteht, in der eine Verbindungslasche angepasster Form (27a, 27b) gleitend angeordnet ist, die fest mit dem vorderen Rand (13) der hinteren Ablage (7) verbunden ist.

7. Kraftfahrzeug, das eine hintere Ablage (7) nach einem der vorhergehenden Ansprüche aufweist.
